# EUROPÄISCHE PATENTSCHRIFT

(11) **EP 3 682 115 B1**
(45) Veröffentlichungstag und Bekanntmachung des Hinweises auf die Patenterteilung: **15.06.2022**
(21) Anmeldenummer: 18746165.2
(22) Anmeldetag: 25.07.2018
(51) Int. Cl.: F02B 33/40, F02B 37/22, F16K 3/03, F04D 29/46, F04D 17/10, F04D 29/08, F02B 39/04, F02B 39/10

(54) **VERDICHTER FÜR EINE AUFLADEVORRICHTUNG EINER BRENNKRAFTMASCHINE UND AUFLADEVORRICHTUNG FÜR EINE BRENNKRAFTMASCHINE**
COMPRESSOR FOR A CHARGING DEVICE OF AN INTERNAL COMBUSTION ENGINE, AND CHARGING DEVICE FOR AN INTERNAL COMBUSTION ENGINE
COMPRESSEUR POUR UN DISPOSITIF DE SURALIMENTATION D'UN MOTEUR À COMBUSTION INTERNE ET DISPOSITIF DE SURALIMENTATION POUR UN MOTEUR À COMBUSTION INTERNE

(30) Priorität: 14.09.2017 DE 102017216323
(43) Veröffentlichungstag der Anmeldung: 22.07.2020
(73) Patentinhaber: Vitesco Technologies GmbH, 93055 Regensburg (DE)
(72) Erfinder: BOGNER, Mathias, 94315 Straubing (DE); SCHÄFER, Christoph, 96450 Coburg (DE); SLAVIC, Sasa, 69126 Heidelberg (DE)
(74) Vertreter: Vitesco Technologies
(86) Internationale Anmeldenummer: PCT/EP2018/070122
(87) Internationale Veröffentlichungsnummer: WO 2019/052728

(56) Entgegenhaltungen:
- EP-A1- 2 006 494
- EP-A1- 3 236 077
- JP-A- 2009 236 035
- US-A- 5 417 083
- US-A1- 2009 095 350
- US-A1- 2016 177 956

## Beschreibung

Die Erfindung betrifft einen Verdichter für eine Aufladevorrichtung einer Brennkraftmaschine und eine Aufladevorrichtung für eine Brennkraftmaschine.

Aufladevorrichtungen wie Abgasturbolader werden vermehrt zur Leistungssteigerung bei Kraftfahrzeug-Verbrennungsmotoren eingesetzt. Dies geschieht immer häufiger mit dem Ziel, den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen, um einen Druck in einem Ansaugtrakt des Verbrennungsmotors zu erhöhen und so eine bessere Befüllung eines Brennraumes des Verbrennungsmotors mit Luft-Sauerstoff zu bewirken. Somit kann mehr Treibstoff, wie Benzin oder Diesel, pro Verbrennungsvorgang umgesetzt werden, also die Leistung des Verbrennungsmotors erhöht werden.

Ein Abgasturbolader weist eine im Abgastrakt des Verbrennungsmotors angeordnete Abgasturbine, einen im Ansaugtrakt angeordneten Frischluftverdichter und ein dazwischen angeordnetes Läuferlager auf. Die Abgasturbine weist ein Turbinengehäuse und ein darin angeordnetes, durch den Abgasmassenstrom angetriebenes Turbinenlaufrad auf. Der Frischluftverdichter weist ein Verdichtergehäuse und ein darin angeordnetes, einen Ladedruck aufbauendes Verdichterlaufrad auf. Das Turbinenlaufrad und das Verdichterlaufrad sind auf den sich gegenüberliegenden Enden einer gemeinsamen Welle, der sogenannten Läuferwelle, drehfest angeordnet und bilden so den sogenannten Turboladerläufer. Die Läuferwelle erstreckt sich axial zwischen Turbinenlaufrad und Verdichterlaufrad durch das zwischen Abgasturbine und Frischluftverdichter angeordnete Läuferlager und ist in diesem, in Bezug auf die Läuferwellenachse, radial und axial drehgelagert. Gemäß diesem Aufbau treibt das vom Abgasmassenstrom angetriebene Turbinenlaufrad über die Läuferwelle das Verdichterlaufrad an, wodurch der Druck im Ansaugtrakt des Verbrennungsmotors, bezogen auf den Frischluftmassenstrom hinter dem Frischluftverdichter, erhöht und dadurch eine bessere Befüllung des Brennraumes mit Luft-Sauerstoff bewirkt wird.

Der Verdichter ist in seinem Betriebsverhalten charakterisiert durch ein sogenanntes Verdichterkennfeld, das den Druckaufbau über den Massendurchsatz für verschiedene Verdichterdrehzahlen oder Umfangsgeschwindigkeiten beschreibt. Ein stabiles und nutzbares Kennfeld des Verdichters wird begrenzt durch die sogenannte Pumpgrenze hin zu niedrigen Durchsätzen, durch die sogenannte Stopfgrenze hin zu höheren Durchsätzen und strukturmechanisch durch die maximale Drehzahlgrenze. Beim Anpassen einer Aufladevorrichtung wie dem Abgasturbolader an einen Verbrennungsmotor wird ein Verdichter mit für den Verbrennungsmotor möglichst günstigem Verdichterkennfeld ausgewählt. Hierbei sollten folgende Voraussetzungen erfüllt sein:
- Eine Motorvolllastlinie soll komplett innerhalb des nutzbaren Verdichterkennfelds liegen;
- vom Fahrzeughersteller geforderte Mindestabstände zu den Kennfeldgrenzen sollen eingehalten werden;
- maximale Verdichterwirkungsgrade sollen bei Nennlast und in einem Bereich eines unteren Eckdrehmomentes des Verbrennungsmotors vorliegen; und
- das Verdichterrad soll ein minimales Trägheitsmoment haben.

Die gleichzeitige Erfüllung aller genannten Voraussetzungen wäre mit einem herkömmlichen Verdichter ohne Zusatzmaßnahmen nur eingeschränkt möglich. Beispielsweise würden sich folgende Zielkonflikte durch gegenläufige Trends ergeben:
- Reduktion des Trägheitsmoments des Verdichters und Maximierung der Kennfeldbreite und des Spitzenwirkungsgrades,
- Reduktion des Spülens im Bereich des unteren Eckdrehmoments und Maximierung der spezifischen Nennleistung,
- Verbesserung des Ansprechverhaltens und Erhöhung der spezifischen Nennleistung des Verbrennungsmotors.

Die genannten Zielkonflikte könnten durch ein Verdichter-Design gelöst werden, das ein breites Kennfeld bei minimalem Trägheitsmoment sowie maximale Wirkungsgrade auf der Volllastlinie des Motors aufweist.

Neben den genannten stationären Anforderungen muss auch bei transienten Betriebszuständen, zum Beispiel bei einem schnellen Lastabwurf des Verbrennungsmotors, ein stabiles Betriebsverhalten des Verdichters gewährleistet sein. Dies heißt, dass der Verdichter auch bei einer plötzlichen Abnahme des geförderten Verdichtermassenstroms nicht ins sogenannte Pumpen gelangen darf.

Mit Einschränkung auf den Verdichtereinlass eines Abgasturboladers ist die oben genannte Lösung bisher durch Zusatzmaßnahmen, wie einem verstellbaren Schaufel-Vorleitapparat, Maßnahmen zur Reduktion eines Einlassquerschnitts des Verdichters oder einem festen Rezirkulationskanal, auch bekannt als Ported Shroud beziehungsweise kennfeldstabilisierende Maßnahme, erreicht worden. Bei den variablen Lösungen wird die Verbreiterung des nutzbaren Arbeitsbereiches des Verdichters durch aktives Verschieben des Kennfeldes erreicht. So wird bei Motorbetrieb mit niedrigen Drehzahlen und Durchsätzen das Verdichterkennfeld nach links hin zu niedrigen Massenströmen verschoben, während im Motorbetrieb bei hohen Drehzahlen und Durchsätzen das Verdichterkennfeld nicht oder nach rechts verschoben wird.

Der Schaufel-Vorleitapparat verschiebt durch die Einstellung von Schaufelwinkeln und Induktion eines Vordralls in beziehungsweise gegen die Verdichterraddrehrichtung das gesamte Verdichterkennfeld hin zu kleineren beziehungsweise größeren Durchsätzen. Der Verstellmechanismus des Vorleitapparats stellt jedoch eine filigrane, komplizierte und teure Lösung dar.

Die Maßnahmen mit Verengung des Verdichtereinlasses durch Querschnittsreduktion verschieben das Verdichterkennfeld hin zu kleineren Durchsätzen, in dem der Einlassquerschnitt durch Schließen der Konstruktion unmittelbar vor dem Verdichter verkleinert wird. Im geöffneten Zustand geben die Maßnahmen möglichst den gesamten Einlassquerschnitt wieder frei und beeinflussen beziehungsweise verschieben so das Kennfeld nicht oder nur marginal. Mögliche, derartige Lösungen sind beispielsweise in der US 2016/265424 A1 oder der DE 10 2011 121 996 A1 beschrieben.

Bei dem festen Rezirkulationskanal handelt es sich um eine passive Lösung. Er verbreitert den nutzbaren Kennfeldbereich des Verdichters, ohne dessen Kennfeld grundsätzlich zu verschieben. Er stellt im Verhältnis zum Vorleitapparat und der beschriebenen variablen Querschnittsreduktion eine deutlich günstigere, aber gleichzeitig weniger effiziente Lösung dar.

Zur Vermeidung des Pumpens bei einem schnellen Lastabwurf wird gewöhnlich ein sogenanntes Schubumluft-Ventil eingesetzt, das im Falle der plötzlichen Abnahme des Ladeluftmassenstroms durch den Motor einen Bypass vom Verdichteraustritt zum Verdichtereintritt öffnet und so den Verdichter im stabilen Kennfeldbereich rechts von der Pumpgrenze hält. Eine Kombination aus aktiven Maßnahmen, wie dem variablen Vorleitapparat und dem Schubumluft-Ventil, ist denkbar, aber unüblich.

Die US 2016/0177956 A1 offenbart einen Radialverdichter für einen Turbolader mit einem Einlass-Einstellmechanismus in einem Lufteinlass für den Verdichter, der zwischen einer geöffneten Position und einer geschlossenen Position im Lufteinlass bewegt werden kann. Der Einlass-Einstellmechanismus weist eine Öffnung mit variabler Geometrie auf, die durch einen drehbaren Stellring betätigt wird. In der geschlossenen Position ist der Innendurchmesser der Öffnung kleiner als der einer Mantelfläche des Verdichtergehäuses und bestimmt somit den effektiven Einlassdurchmesser für den Verdichter. In geöffneter Position hat die Öffnung keinen Innendurchmesser mehr, der kleiner als die Mantelfläche ist, so dass der effektive Einlassdurchmesser durch die Mantelfläche bestimmt wird.

Die US 5,417,083 bezieht sich auf Expansionsventile für den Einsatz in Kälteanlagen, insbesondere auf ein in Reihe geschaltetes elektrisch betätigtes Expansionsventil des Kühlsystems, das eine stufenweise einstellbare Kältemittelflussregelung zwischen der Hoch- und der Niederdruckseite eines Kühlsystems ermöglicht.

JP 2009 236035 A offenbart einen Verdichter gemäß dem Oberbegriff des Anspruchs 1.

Eine Aufgabe, die der Erfindung zugrunde liegt, ist es, ein Konzept für eine Aufladevorrichtung anzugeben, welches zu einem effizienten Betrieb der Aufladevorrichtung beiträgt.

Es wird ein Verdichter, etwa ein Radialverdichter, für eine Aufladevorrichtung einer Brennkraftmaschine offenbart. Der Verdichter weist ein Verdichterrad auf, welches drehfest auf einer Läuferwelle angeordnet ist. Der Verdichter weist einen Luftzuführkanal zum Leiten eines Luftmassenstroms auf das Verdichterrad auf. Weiter ist ein stromaufwärts vor dem Verdichterrad angeordneter Irisblendenmechanismus vorgesehen, der mehrere Lamellen aufweist und ausgebildet ist, eine Blendenöffnung zu schließen oder zu öffnen, so dass ein Strömungsquerschnitt für den Luftmassenstrom zum Anströmen des Verdichterrads variabel einstellbar ist. Der Verdichter weist ein Gehäuse auf, welches den Luftzuführkanal zumindest teilweise begrenzt und in welchem der Irisblendenmechanismus angeordnet und gelagert ist. Weiter ist ein Aktuator vorgesehen, der über eine Öffnung im Gehäuse mit dem Irisblendenmechanismus zur Betätigung dessen mechanisch gekoppelt ist. Der Aktuator ist derart am Gehäuse angeordnet, dass mittels des Aktuators die Öffnung abgedichtet verschlossen ist. Dazu ist ein Dichtmaterial vorgesehen, welches die Öffnung umgibt und welches zwischen dem Aktuator und dem Gehäuse angeordnet ist, wobei das Gehäuse oder der Aktuator eine die Öffnung umgebende Nut aufweist, in welcher das Dichtmaterial angeordnet ist.

Der Verdichter für die Aufladevorrichtung sieht einen variablen Irisblendenmechanismus vor, der typischerweise direkt vor dem Verdichtereinlass zur Kennfeldverschiebung angeordnet ist. Der Irisblendenmechanismus kann auch als Irisblende oder Irisdrossel bezeichnet werden und hat die Aufgabe, den Einlassmassenstrom des Verdichters durch stufenlose Veränderung des Strömungsquerschnitts einzustellen. Die Irisdrossel wirkt dabei wie eine Art Maskierung eines äußeren Bereichs des Verdichtereinlasses. Bei zunehmender Drosselung, das heißt Querschnittsverengung, übernimmt die Irisdrossel gleichzeitig die Aufgabe eines Schubumluft-Ventils, da sie ein Pumpen des Verdichters unterbinden kann. Dadurch ist es möglich, den Betriebsbereich des Verdichters aktiv zu beeinflussen und zusätzlich den Verdichter bei einem plötzlichen Lastabwurf des Motors in einem stabilen Betriebspunkt zu halten.

Der Irisblendenmechanismus weist mehrere, durch Drehung ineinander verschiebbare Lamellen auf. Der Irisblendenmechanismus ist in dem oben genannten (feststehenden) Gehäuse gelagert. Jede Lamelle ist einerseits in beziehungsweise an dem feststehenden Gehäuse und andererseits an einem bewegbar gelagerten Verstellring gelagert. Das Gehäuse ist beispielsweise ein separates Gehäuse des Irisblendenmechanismus, Teil des Verdichtergehäuses der Aufladevorrichtung oder mehrteilig ausgebildet, etwa durch einen Teil des Verdichtergehäuses und ein separates, zusätzliches Gehäuseteil. Das Gehäuse ist beispielsweise ringförmig ausgebildet oder hat einen ringförmigen Abschnitt. Das Gehäuse kann auch ein feststehendes, ringförmiges Gehäuseelement sein. Die Lamellen werden über den Verstellring synchronisiert und gemeinsam bewegt. Durch Drehung des Verstellrings wird auch die Drehung der Lamellen ausgelöst. Bei einer Drehung der Lamellen parallel zur Drehachse des Verdichterrads schwenken die Lamellen radial nach innen und führen so zu einer gewünschten Verengung des Strömungsquerschnittes direkt vor dem Verdichterrad. Der Verstellring selbst wird über den Aktuator angesteuert und bewegt. Der Aktuator ist bspw. ein elektrisch oder pneumatisch betriebener Steller.

Eine Lamelle hat einen im Wesentlichen plattenförmigen und/oder flachen Lamellengrundkörper, der für die Abschirmung des Luftmassenstroms und somit der Einstellung der Blendenöffnung dient. Für die Lagerung am Gehäuse und Verstellring weist eine Lamelle etwa zwei Halteelemente (auch Betätigungselemente) auf, die beispielsweise jeweils in einem Befestigungsabschnitt des Lamellengrundkörpers angeordnet sind. Ein Halteelement ist beispielsweise als Haltestift oder stiftförmiger Haltekörper ausgebildet. Ein Halteelement erstreckt sich typischerweise normal zu einer Haupterstreckungsebene des Lamellengrundkörpers. Die Befestigungsabschnitte können beispielsweise als ein erstes und ein zweites Ende oder als ein erster beziehungsweise zweiter Endbereich der jeweiligen Lamelle ausgebildet sein. Die beiden Befestigungsabschnitte einer Lamelle haben typischerweise gleiche Wandstärken.

Der Luftzuführkanal ist in dem Verdichter ausgebildet. Beispielsweise ist der Luftzuführkanal zumindest teilweise durch das Gehäuse, den Irisblendenmechanismus, einen Ansaugstutzen und/oder andere Komponenten des Verdichters ausgebildet. Das Gehäuse umschließt zumindest einen Verstellring und die Lamellen des Irisblendenmechanismus.

Bei dem beschriebenen Verdichter fungiert der Aktuator selbst als Teil einer Dichtung. Mit anderen Worten ist eine in den Aktuator integrierte Dichtung vorgesehen. Dadurch ist der Strömungsraum, etwa der Luftzuführkanal und der Raum innerhalb des Gehäuses, in welchem der Irisblendenmechanismus gelagert ist, gegen eine Umgebung des Verdichters abgedichtet. Dadurch kann es nicht zu Leckageströmungen von innerhalb des Verdichters nach außen zur Umgebung hinkommen. Der Aktuator und das Gehäuse als Gegenstück sind folglich dichtend miteinander verbunden.

Dazu ist ein Dichtmaterial vorgesehen, welches die Öffnung umgibt und welches zwischen dem Aktuator und dem Gehäuse angeordnet ist. Bei dem Dichtmaterial handelt es sich beispielsweise um ein Gummimaterial, insbesondere um einen O-Ring oder ein anderes Dichtelement.

Der Aktuator oder das Gehäuse weist eine die Öffnung umgebende Nut auf, in welcher das Dichtmaterial angeordnet ist. Dadurch wird die oben beschriebene Dichtfunktion bewirkt und das Dichtmaterial ist sicher an einer der beiden Komponenten festgelegt oder darin aufgenommen.

Durch das beschriebene Dichtkonzept wird mit Vorteil eine verbesserte Haltbarkeit erreicht, da nicht gegen bewegliche Teile abgedichtet werden muss . Der Aktuator dichtet gegenüber dem Gehäuse ab, so dass zwischen zwei im Betrieb nicht bewegten Teilen die Dichtung erzielt ist. Das Dichtkonzept trägt zu einem geringeren Aufwand hinsichtlich einer Montage und Herstellung bei. Weiterhin wird zu einer kostengünstigen Lösung sowie zu einer besonders verschleißfreien Lösung beigetragen. Ein weiterer Vorteil besteht darin, dass sich die Elemente des Irisblendenmechanismus, insbesondere die Lamellen und der Verstellring, frei innerhalb des Gehäuses bewegen können. Verstellkräfte zum Einstellen der Blendenöffnung sind somit wesentlich geringer im Vergleich zu einer Ausführung, bei welcher die bewegten Teile abgedichtet würden, da in diesem Falle aufgrund der Berührung zwischen Dichtflächen und Gleitflächen zusätzliche Reibung erzeugt werden würde.

Ein weiterer Vorteil besteht bei der Schmierung des gekapselten Irisblendenmechanismus mit einem Schmiermittel, beispielsweise Fett. Durch die Kapselung kann es zu keinem Auswaschen des Schmiermittels kommen. Die Schmierung ist damit im Wesentlichen wartungsfrei. Ein weiterer Vorteil besteht darin, dass die Kopplung zwischen dem Aktuator und dem Irisblendenmechanismus aufgrund der direkten Anbindung ans Gehäuse des Aktuators besonders kurz ausgeführt werden kann. Dies trägt zu einer Reduzierung eines Bauraumbedarfs bei. Ein weiterer Vorteil besteht darin, dass auf einem zusätzlichen Deckel zum Abdichten des Irisblendenmechanismus verzichtet werden kann. Dies trägt dazu bei, dass der Verdichter insgesamt kompakter und kostengünstiger herstellbar ist.

Zusammengefasst trägt das beschriebene Konzept zu einem effizienten Verdichter bei. Auch wird dazu beigetragen, die eingangs genannten Zielkonflikte zu lösen.

Gemäß einer Ausführungsform ist der Aktuator als Deckel für die Öffnung des Gehäuses ausgebildet. Dies trägt zu den oben genannten Vorteilen und Funktionen bei. Insbesondere muss kein zusätzlicher Deckel vorgesehen werden, da diese Funktion in den Aktuator selbst integriert ist.

Gemäß einer weiteren Ausgestaltung weist der Aktuator zumindest in einem Abschnitt eine flache Unterseite auf, mit welcher der Aktuator die Öffnung abdeckend an dem Gehäuse von außen festgelegt ist. Dadurch wird eine besonders einfache Montage und sichere Funktionsweise gewährleistet.

Gemäß einer Ausführungsform ist der Aktuator über einen innerhalb des Gehäuses angeordneten Koppelmechanismus mit einem verstellbaren Verstellring des Irisblendenmechanismus zum Schließen oder Öffnen der Blendenöffnung mechanisch gekoppelt. Dadurch ist der Koppelmechanismus ebenfalls vollständig in das Gehäuse integriert und durch den Aktuator mit abgedichtet. Der Koppelmechanismus liegt somit nicht frei, wodurch eine Verschmutzung dessen vermieden oder nahezu vermieden werden kann. Dadurch wird insgesamt zu einer langen Lebensdauer des Irisblendenmechanismus beigetragen, wobei eine ungestörte Funktionsfähigkeit über einen langen Zeitraum gewährleistet ist. Zusätzlich gilt analog zu oben, dass eine effiziente und effektive Schmierung des integrierten Koppelmechanismus mit Schmiermitteln wie Fett ermöglicht ist. Durch die Kapselung wird ein Auswaschen des Schmiermittels vermieden und eine wartungsfreie Schmierung ist gegeben. Bei dem Koppelmechanismus handelt es sich im Wesentlichen um eine Mechanik, die den Aktuator mit dem Verstellring koppelt, so dass dieser betätigbar ist. Der Koppelmechanismus umfasst beispielsweise eine Koppelstange, die drehfest an einer Aktuatorwelle des Aktuators angebunden ist und die über einen Koppelstift fest mit dem Verstellring zum Verstellen dessen verbunden ist.

Das beschriebene Gehäuse kann verschiedene Ausführungsformen aufweisen. Beispielsweise kann das Gehäuse einteilig oder mehrteilig ausgebildet sein.

Beispielsweise ist das Gehäuse zweiteilig ausgebildet, wobei ein erster Teil des Gehäuses ein Teil eines Verdichtergehäuses ist und ein zweiter Teil als ein mit dem ersten Teil verbundenes Gehäuseelement ausgebildet ist. Der Irisblendenmechanismus ist somit teilweise an dem Verdichtergehäuse und teilweise an dem Gehäuseelement gelagert, wobei das Gehäuseelement und das Verdichtergehäuse eine Gehäuseeinheit für den Mechanismus bilden.

In einer anderen Ausführungsform ist das Gehäuse als Teil eines Verdichtergehäuses ausgebildet. In diesem Fall handelt es sich um eine einteilige Lösung des Verdichtergehäuses, welches beispielsweise in einem Gießverfahren hergestellt ist.

In einer weiteren Ausführungsform handelt es sich bei dem Gehäuse um ein zu dem Verdichtergehäuse separates Gehäuse, welches an dem Verdichtergehäuse festgelegt ist. Mit anderen Worten handelt es sich um eine separate Baueinheit, welche den Irisblendenmechanismus samt Koppelmechanismus und Aktuator aufweist und als diese Baueinheit an das Verdichtergehäuse angebunden ist. Das separate Gehäuse kann analog ein- oder mehrteilig ausgebildet sein.

Des Weiteren wird eine Aufladevorrichtung für eine Brennkraftmaschine offenbart, die ein Läuferlager, in welchem eine Läuferwelle drehbar gelagert ist, und einen Verdichter nach einer der vorhergehend beschriebenen Ausführungsformen aufweist. Die Aufladevorrichtung ist als Abgasturbolader oder als elektromotorisch betriebener Lader oder als ein über eine mechanische Kopplung mit der Brennkraftmaschine betriebener Lader ausgebildet. Die Aufladevorrichtung ist also beispielsweise als ein Abgasturbolader ausgebildet, der zum Antrieb des Verdichterlaufrades des Verdichters eine Abgasturbine aufweist oder ist alternativ als ein elektromotorisch betriebener Lader (auch E-Booster genannt) ausgebildet, der zum Antrieb des Verdichterlaufrades des Verdichters einen elektromotorischen Antrieb aufweist. Weiterhin kann die Aufladevorrichtung alternativ zu den zuvor genannten Ausführungen auch als ein über eine mechanische Kopplung mit der Brennkraftmaschine betriebener Lader ausgebildet sein. Eine solche Kopplung zwischen der Brennkraftmaschine und dem Radialverdichter kann beispielsweise mittels eines Zwischengetriebes erfolgen, das einerseits mit einer rotierenden Welle der Brennkraftmaschine und andererseits mit der Läuferwelle des Radialverdichters in Wirkverbindung steht.

Die Aufladevorrichtung ermöglicht im Wesentlichen die vorgenannten Vorteile und Funktionen. Insbesondere eignet sich der zuvor beschriebene Verdichter in sämtlichen Ausführungsformen sowohl für einen Abgasturbolader, bei dem wie eingangs erläutert eine Turbine durch einen Abgasmassenstrom angetrieben wird, oder für einen elektromotorisch betriebenen Lader. Ein elektromotorisch betriebener Lader bzw. eine Aufladevorrichtung mit einem elektromotorisch betriebenen Lader wird auch als sogenannter E-Booster oder E-Kompressor bezeichnet.

Ein Ausführungsbeispiel wird unter Zuhilfenahme der angehängten Figuren nachfolgend beschrieben. Gleichartige oder gleichwirkende Elemente sind figurenübergreifend mit den gleichen Bezugszeichen versehen.

In den Figuren zeigen:
Figur 1 eine schematische Schnittansicht einer Aufladevorrichtung mit einem Verdichter mit Irisblendenmechanismus,
Figuren 2A bis 2C schematische Aufsichten des Irisblendenmechanismus in drei verschiedenen Zuständen,
Figur 3 eine schematische Querschnittsansicht eines Verdichters mit Irisblendenmechanismus, der nicht gemäß der Erfindung ist, und
Figur 4 eine schematische Querschnittsansicht eines Verdichters mit Irisblendenmechanismus gemäß einem Ausführungsbeispiel der Erfindung.

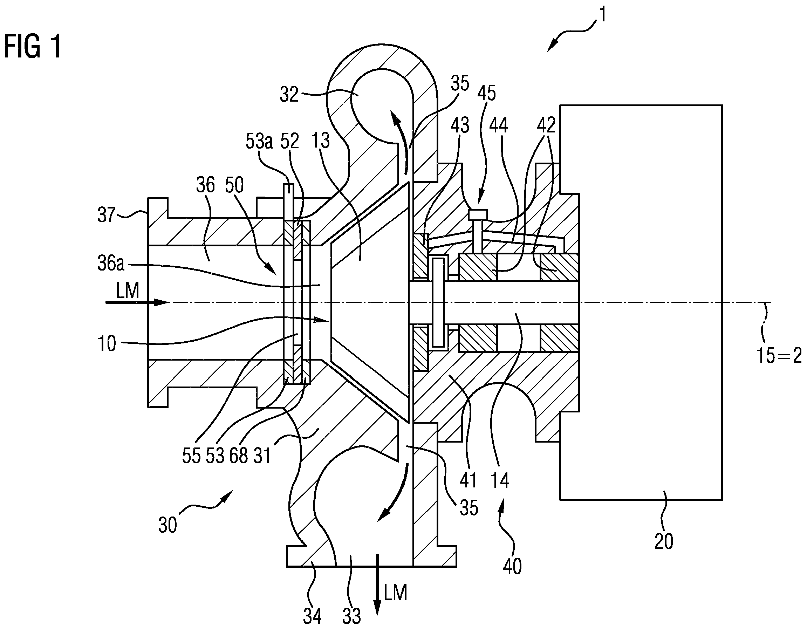

Figur 1 zeigt schematisiert ein Beispiel einer Aufladevorrichtung 1 in Schnittdarstellung, die einen Verdichter 30 (hier ein Radialverdichter), ein Läuferlager 40 und eine Antriebseinheit 20 umfasst. Der Verdichter 30 weist ein optionales Schub-Umluftventil (nicht dargestellt) auf und ein Luft-Massestrom LM ist ebenfalls mit Pfeilen angedeutet. Ein sogenannter Laderläufer 10 der Aufladevorrichtung 1 weist ein Verdichterlaufrad 13 (auch Verdichterrad bezeichnet) sowie eine Läuferwelle 14 auf (auch Welle bezeichnet). Der Laderläufer 10 rotiert im Betrieb um eine Läuferdrehachse 15 der Läuferwelle 14. Die Läuferdrehachse 15 und gleichzeitig die Laderachse 2 (auch Längsachse bezeichnet) sind durch die eingezeichnete Mittellinie dargestellt und kennzeichnen die axiale Ausrichtung der Aufladevorrichtung 1. Der Laderläufer 10 ist hier mit seiner Läuferwelle 14 mittels zweier Radiallager 42 und einer Axiallagerscheibe 43 in einem Lagergehäuse 41 gelagert. Sowohl die Radiallager 42 als auch die Axiallagerscheibe 43 werden über Ölversorgungskanäle 44 eines Ölanschlusses 45 mit Schmiermittel versorgt.

In diesem Beispiel weist eine Aufladevorrichtung 1, wie in Figur 1 dargestellt, einen mehrteiligen Aufbau auf. Dabei sind ein Gehäuse der Antriebseinheit 20, ein im Ansaugtrakt des Verbrennungsmotors anordenbares Verdichtergehäuse 31 und ein zwischen dem Gehäuse der Antriebseinheit 20 und Verdichtergehäuse 31 vorgesehenes Läuferlager 40 bezüglich der gemeinsamen Laderachse 2 nebeneinander angeordnet und montagetechnisch miteinander verbunden, wobei auch alternative Anordnungen und Konfigurationen von Antriebseinheiten und Läuferlagern möglich sind.

Eine weitere Baueinheit der Aufladevorrichtung 1 stellt der Laderläufer 10 dar, der zumindest die Läuferwelle 14 und das in dem Verdichtergehäuse 31 angeordnete Verdichterlaufrad 13 mit einer Laufradbeschaufelung 131 aufweist. Das Verdichterlaufrad 13 ist auf einem Ende der Läuferwelle 14 angeordnet und mit dieser drehfest verbunden. Die Läuferwelle 14 erstreckt sich in Richtung der Laderachse 2 axial durch das Lagergehäuse 41 und ist in diesem axial und radial um seine Längsachse, die Läuferdrehachse 15, drehgelagert, wobei die Läuferdrehachse 15 in der Laderachse 2 liegt, also mit dieser zusammenfällt.

Das Verdichtergehäuse 31 weist einen Luftzuführkanal 36 auf, der optional einen Saugrohr-Anschlussstutzen 37 zum Anschluss an das Luft-Saugsystem (nicht dargestellt) des Verbrennungsmotors aufweist und in Richtung der Laderachse 2 auf das axiale Ende des Verdichterlaufrades 13 zu verläuft. Über diesen Luftzuführkanal 36 wird der Luftmassenstrom LM vom Verdichterlaufrad 13 aus dem Luft-Saugsystem angesaugt und auf das Verdichterrad 13 geleitet. Der Luftzuführkanal 36 kann auch ein Teil eines Ansaugstutzens sein und somit nicht Teil des Verdichtergehäuses 31. Der Luftzuführkanal 36 schließt beispielsweise an das Verdichtergehäuse 31 an und bildet einen Verdichtereinlass 36a zum Leiten des Luftmassenstroms LM auf das Verdichterlaufrad 13.

Weiterhin weist das Verdichtergehäuse 31 in der Regel einen, ringförmig um die Laderachse 2 und das Verdichterlaufrad 13 angeordneten, sich schneckenförmig vom Verdichterlaufrad 13 weg erweiternden Ringkanal, einen sogenannten Spiralkanal 32, auf. Dieser Spiralkanal 32 weist eine zumindest über einen Teil des Innenumfanges verlaufende Spaltöffnung mit definierter Spaltbreite, den sogenannten Diffusor 35, auf, der in radialer Richtung vom Außenumfang des Verdichterlaufrads 13 weg gerichtet in den Spiralkanal 32 hinein verläuft und durch den der Luftmassenstrom LM vom Verdichterlaufrad 13 weg unter erhöhtem Druck in den Spiralkanal 32 strömt.

Der Spiralkanal 32 weist weiterhin einen tangential nach außen gerichteten Luftabführkanal 33 mit einem optionalen Verteiler-Anschlussstutzen 34 zum Anschluss an ein Luft-Verteilerrohr (nicht dargestellt) eines Verbrennungsmotors auf. Durch den Luftabführkanal 33 wird der Luftmassenstrom LM unter erhöhtem Druck in das Luft-Verteilerrohr des Verbrennungsmotors geleitet.

Die Antriebseinheit 20 ist in Figur 1 nicht weiter detailliert und kann sowohl als Abgasturbine als auch als elektromotorische Antriebseinheit oder auch als eine mechanische Kopplung mit der Brennkraftmaschine, z. B. als Zwischengetriebe, das das mit einer rotierenden Welle der Brennkraftmaschine in Wirkverbindung steht, ausgeführt sein, was die Aufladevorrichtung 1 im einen Fall zu einem Abgasturbolader und im anderen Fall zu einem elektromotorisch betriebenen Lader auch als E-Booster oder E-Kompressor bezeichnet oder zu einem mechanischen Lader, macht. Im Falle eines Abgasturboladers wäre gegenüber des Verdichterrads 13 beispielsweise ein Turbinenlaufrad (auch Turbinenrad bezeichnet) vorgesehen, welches ebenfalls auf der Läuferwelle 14 drehfest angeordnet und von einem Abgasmassenstrom angetrieben würde.

Im Luftmassenstrom LM stromaufwärts vor dem Verdichterlaufrad 13 ist ein Irisblendenmechanismus 50 zusätzlich oder alternativ zu einem Schubumluft-Ventil (siehe Figur 1) im Luftzuführkanal 36 unmittelbar vor einem Verdichtereinlass 36a (auch Verdichtereintritt) angeordnet und/oder bildet zumindest einen Teilbereich des Luftzuführkanals 36 unmittelbar vor dem Verdichtereinlass 36a des Verdichtergehäuses 31. Der Irisblendenmechanismus 50 ähnelt hinsichtlich seines Funktionsprinzips einer Irisblende in einem Fotoapparat. Der Irisblendenmechanismus 50 ist dazu ausgebildet, eine Blendenöffnung zumindest teilweise zu schließen oder zu öffnen, so dass ein Strömungsquerschnitt für den Luftmassenstrom LM zum Anströmen des Verdichterlaufrads 13 zumindest über einen Teilbereich des Strömungsquerschnittes variabel einstellbar ist. Der Irisblendenmechanismus 50 ermöglicht eine Kennfeldverschiebung für den Verdichter 30, in dem dieser als variable Einlassdrossel für das Verdichterrad 13 fungiert.

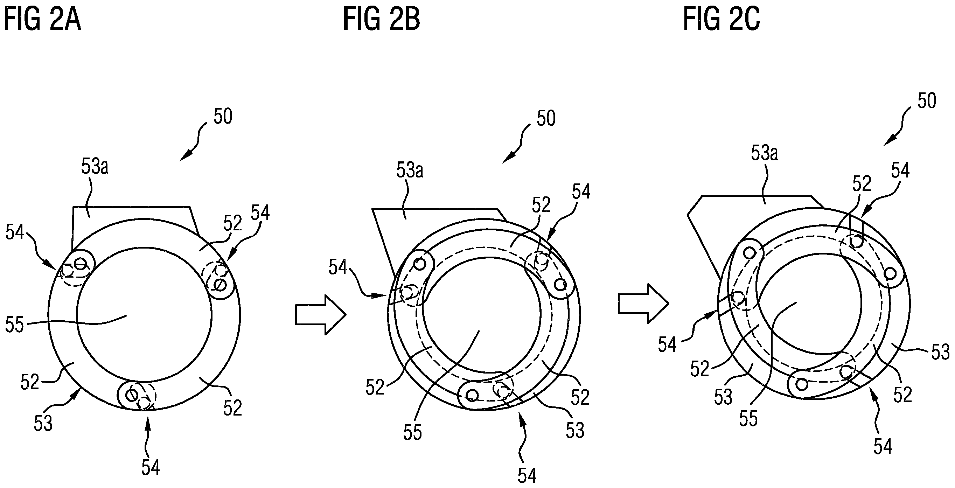

Figuren 2A bis 2C zeigen schematisch den Irisblendenmechanismus 50 der Aufladevorrichtung 1 in drei verschiedenen Betriebszuständen. Der Irisblendenmechanismus 50 ist an oder in dem Verdichtergehäuse 31 festgelegt und/oder bildet dieses zumindest teilweise. Alternativ ist der Irisblendenmechanismus 50 an einem separaten, feststehenden Gehäuse für den Irisblendenmechanismus 50 gelagert. Alternativ ist der Irisblendenmechanismus 50 an beziehungsweise in einem mehrteiligen Gehäuse gelagert, wobei ein Teil des mehrteiligen Gehäuses durch das Verdichtergehäuse 31 und ein Teil durch ein zusätzliches separates Gehäuse (-element) gebildet ist. Der Irisblendenmechanismus 50 weist einen im Luftzuführkanal 36 konzentrisch zum Verdichtereinlass 36a festgelegten Lagerring 68, einen konzentrisch dazu angeordneten, um ein gemeinsames Zentrum drehbaren Verstellring 53 mit einem Stellhebel 53a und mehrere um einen jeweiligen Drehpunkt im Lagerring 68 drehbar gelagerte Lamellen 52 auf. Anstelle des Lagerrings 68 kann auch das Verdichtergehäuse 31 oder ein anderes Gehäuse (-element) als Lager dienen. Die Lamellen 52 weisen beispielsweise einen plattenförmigen Lamellengrundkörper und zumindest ein stiftförmiges Betätigungselement (hier nicht erkennbar), welches zur Betätigung der jeweiligen Lamelle 52 ausgebildet ist, als integrale Bestandteile der jeweiligen Lamelle 52 auf.

An dem Verstellring 53 sind die Lamellen 52 ebenfalls drehbar und/oder verschiebbar, etwa mittels des Betätigungselements, geführt. Im Beispiel hat der Verstellring 53 drei Nuten 54 (in den Figuren angedeutet) zur Lagerung/Führung der Lamellen 52. Über den Verstellring 53 werden die Lamellen 52 synchronisiert und bewegt. Der Verstellring 53 ist beispielsweise am oder im Gehäuse gelagert. Durch Betätigung des Verstellrings 53 werden die Lamellen 52 radial nach innen verschwenkt und verengen eine Blendenöffnung 55 des Irisblendenmechanismus 50. Figur 2A zeigt dabei die Blendenöffnung 55 mit einer maximalen Öffnungsweite (Offenstellung), Figur 2B zeigt die Blendenöffnung 55 mit einer verringerten Öffnungsweite und Figur 2C zeigt die Blendenöffnung 55 mit einer minimalen Öffnungsweite (Schließstellung).

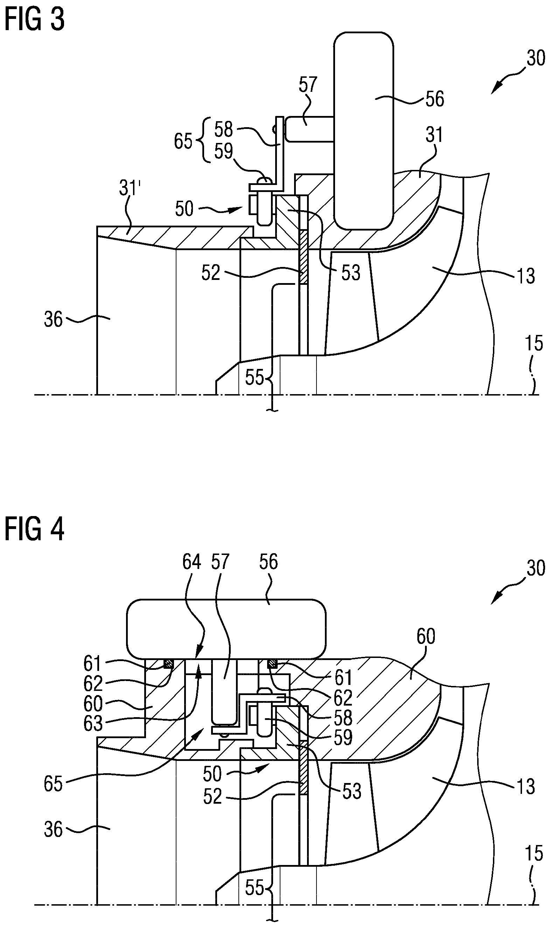

Figur 3 zeigt, in einer schematischen Seiten (quer) ansicht, einen Verdichter 30 mit einem Irisblendenmechanismus 50. Dieser Verdichter ist nicht gemäß der Erfindung. Der Irisblendenmechanismus 50 ist mit dem Verstellring 53 und Lamellen 52 dargestellt, welche die Blendenöffnung 55 begrenzen. Der Irisblendenmechanismus 50 ist zwischen dem Verdichtergehäuse 31 und einem weiteren Gehäuseelement 31', welches mit dem Verdichtergehäuse 31 verbunden ist, gelagert. An dem Verdichtergehäuse 31 ist ein Aktuator 56 gelagert, der eine Aktuatorwelle 57 aufweist. Drehfest an der Aktuatorwelle 57 ist eine Koppelstange 58 angebunden, die wiederum selbst mit einem Koppelstift 59 mit dem Verstellring 53, etwa dem oben genannten Stellhebel, verbunden ist. Dadurch sind durch Betätigung des Aktuators 56 und Drehung der Aktuatorwelle 57 der Verstellring 53 und damit wie eingangs erwähnt, die Lamellen 52 verstellbar.

Bei der beschriebenen Ausführungsform ist der Aktuator 56 am Verdichtergehäuse 31 angebunden, was einen in der Regel langen und aufwendigen Koppelmechanismus 65 zur Betätigung des Irisblendenmechanismus 50 bedingt. Der Koppelmechanismus 65 ist durch die Koppelstange 58 und durch den Koppelstift 59 gebildet. Der Koppelmechanismus 65 kann auch weitere Elemente, die zur Kopplung des Aktuators 56 mit dem Verstellring 53 vorgesehen sind, umfassen oder gänzlich anders aufgebaut sein. Weiterhin liegen der Koppelmechanismus 65 und ein Teil des Verstellrings 53 nach außen hin frei. Dadurch können diese Teile verschmutzen und in der Folge kann die Beweglichkeit des Irisblendenmechanismus 50 beeinträchtigt sein. Im schlimmsten Fall kommt es sogar zu einem Versagen der Funktion des Irisblendenmechanismus 50.

Es sei an dieser Stelle erwähnt, dass es sich bei der Figur 3 wie auch der nachfolgend beschriebenen Figur 4 um keine maßstabsgetreuen und lediglich schematischen Darstellungen handelt. So ist beispielsweise in Figur 3 der Aktuator lediglich als abgerundetes Rechteck dargestellt, was den Anschein erweckt, als sei dieser flach ausgeführt. In der Praxis sind jedoch die Aktuatoren und insbesondere deren Gehäuse in der Regel beliebig strukturiert gestaltet.

Figur 4 zeigt in einer schematischen Seitenansicht einen Verdichter 30 gemäß einem Ausführungsbeispiel der Erfindung. Analog zu oben ist ein Aktuator 56 mit einer Antriebswelle 57 gezeigt. An der Antriebswelle 57 ist wiederum eine Koppelstange 58 drehfest angebunden, die selbst mittels des Koppelstifts 59 an dem Verstellring 53 angebunden ist. Im Unterschied zum vorherigen Beispiel ist der Irisblendenmechanismus 50 sowie der Koppelmechanismus 65 bestehend aus der Koppelstange 58 und dem Koppelstift 59 innerhalb eines Gehäuses 60 des Verdichters 30 angeordnet. Mit anderen Worten sind die vorgenannten Elemente in das Gehäuse 60 integriert. Bei dem Gehäuse 60 handelt es sich beispielsweise um das Verdichtergehäuse 31 (siehe Figuren 1 und 3) . Es kann sich jedoch um ein separates Gehäuse handeln oder um ein zweigeteiltes Gehäuse bestehend aus dem Verdichtergehäuse sowie einem zusätzlichen Gehäuseelement. Das Gehäuse 60 begrenzt den Luftzuführkanal 36 zumindest teilweise. Das Gehäuse 60 weist nach außen zur Umgebung hin eine Öffnung 63 auf, über welche der Aktuator 56 mit dem Irisblendenmechanismus 50 zur Betätigung dessen mechanisch gekoppelt ist.

Beim gezeigten Ausführungsbeispiel gemäß Figur 4 fungiert der Aktuator 56 als Deckel für das Gehäuse 60 und verschließt abdichtend die Öffnung 63. Hierzu weist das Gehäuse 60 die Öffnung 63 umgebend eine Nut 62 auf, in welcher Dichtmaterial 61 angeordnet ist. Alternativ sind die Nut 62 sowie das Dichtmaterial 62 in dem Aktuator 56 selbst angeordnet. Im Gegensatz zur Ausführung gemäß Figur 3 ist im Ausführungsbeispiel der Figur 4 die Unterseite 64 des Aktuators 56 flach ausgeführt und überdeckt die Öffnung 63 vollständig, so dass die Deckelfunktion erreicht ist.

Durch die beschriebenen Ausgestaltungen werden die eingangs genannten Vorteile und Funktionen erreicht. Insbesondere dient der Aktuator 56 selbst, im Zusammenspiel mit dem in einer die Öffnung 63 umgebenden Nut 62 angeordneten Dichtmaterial 61, als Dichtung. Zugleich ist der Koppelmechanismus 65 selbst im Gegensatz zu der Ausführung gemäß Figur 3 in das Gehäuse 60 integriert. Es ist somit nicht notwendig bewegliche Teile gegen die Umgebung abzudichten. Die strömungsführenden Bauteile des Verdichters 30, insbesondere der Luftzuführkanal 36, sind somit verdichterseitig gegen die Umgebung abgedichtet.

Es sei an dieser Stelle darauf hingewiesen, dass der beschriebene Verdichter 30 nicht zwingend Teil der in Figur 1 exemplarisch beschriebenen Aufladevorrichtung 1 sein muss. Vielmehr kann die Aufladevorrichtung 1 auch andersartig ausgestaltet sein.

## Patentansprüche

1. Verdichter (30) für eine Aufladevorrichtung (1) einer Brennkraftmaschine, aufweisend
- ein Verdichterrad (13), welches drehfest auf einer Läuferwelle (14) angeordnet ist; und
- einen Luftzuführkanal (36) zum Leiten eines Luftmassenstroms (LM) auf das Verdichterrad (13),
- einen stromaufwärts vor dem Verdichterrad (13) angeordneten Irisblendenmechanismus (50), der mehrere Lamellen (52) aufweist und ausgebildet ist, eine Blendenöffnung (55) zu schließen oder zu öffnen, so dass ein Strömungsquerschnitt für den Luftmassenstrom (LM) zum Anströmen des Verdichterrads (13) variabel einstellbar ist;
- ein Gehäuse (60), welches den Luftzuführkanal (36) zumindest teilweise begrenzt und in welchem der Irisblendenmechanismus (50) angeordnet und gelagert ist; und
- einen Aktuator (56), der über eine Öffnung (63) im Gehäuse (60) mit dem Irisblendenmechanismus (50) zur Betätigung dessen mechanisch gekoppelt ist,
**dadurch gekennzeichnet, dass** der Aktuator (56) derart am Gehäuse (60) angeordnet ist, dass mittels des Aktuators (56) die Öffnung (63) abgedichtet verschlossen ist, wobei ein Dichtmaterial (61) vorgesehen ist, welches die Öffnung (63) umgibt und welches zwischen dem Aktuator (56) und dem Gehäuse (60) angeordnet ist, wobei das Gehäuse (60) oder der Aktuator (56) eine die Öffnung (63) umgebende Nut (62) aufweist, in welcher das Dichtmaterial (61) angeordnet ist.

2. Verdichter (30) nach Anspruch 1, wobei der Aktuator (56) als Deckel für die Öffnung (63) des Gehäuses (60) ausgebildet ist.

3. Verdichter (30) nach Anspruch 1 oder 2, wobei der Aktuator (56) eine flache Unterseite (64) aufweist, mit welcher der Aktuator (56) die Öffnung (63) abdeckend an dem Gehäuse (60) von außen festgelegt ist.

4. Verdichter (30) nach einem der vorhergehenden Ansprüche, wobei der Aktuator (56) über einen innerhalb des Gehäuses (60) angeordneten Koppelmechanismus (65) mit einem verstellbaren Verstellring (53) des Irisblendenmechanismus (50) zum Schließen oder Öffnen der Blendenöffnung (55) mechanisch gekoppelt ist.

5. Verdichter (30) nach einem der vorhergehenden Ansprüche, wobei das Gehäuse (60) einteilig oder mehrteilig ausgebildet ist.

6. Verdichter (30) nach Anspruch 5, wobei das Gehäuse (60) zweiteilig ausgebildet ist, wobei ein erster Teil des Gehäuses (60) Teil eines Verdichtergehäuses (31) ist und ein zweiter Teil als ein mit dem ersten Teil verbundenes Gehäuseelement ausgebildet ist.

7. Verdichter (30) nach einem der vorhergehenden Ansprüche, wobei das Gehäuse (60) als Teil eines Verdichtergehäuses (31) ausgebildet ist.

8. Verdichter (30) nach einem der Ansprüche 1 bis 5, wobei das Gehäuse (60) ein zu einem Verdichtergehäuse (31) separates Gehäuse ist, welches an dem Verdichtergehäuse (31) festgelegt ist.

9. Aufladevorrichtung (1) für eine Brennkraftmaschine, aufweisend ein Läuferlager (40), in welchem eine Läuferwelle (14) drehbar gelagert ist, und
einen Verdichter (30) nach einem der vorhergehenden Ansprüche, wobei die Aufladevorrichtung (1) als Abgasturbolader oder als elektromotorisch betriebener Lader oder als ein über eine mechanische Kopplung mit der Brennkraftmaschine betriebener Lader ausgebildet ist.

## Claims

1. Compressor (30) for a supercharging device (1) of an internal combustion engine, having
- a compressor wheel (13) which is arranged rotationally conjointly on a rotor shaft (14); and
- an air supply channel (36) for conducting an air mass flow (LM) to the compressor wheel (13),
- an iris diaphragm mechanism (50) which is arranged upstream of the compressor wheel (13) and which has multiple lamellae (52) and which is configured for closing or opening a diaphragm aperture (55), so that variable setting of a flow cross section for the air mass flow (LM) for incident flow on the compressor wheel (13) is possible;
- a housing (60) which at least partially delimits the air supply channel (36) and in which the iris diaphragm mechanism (50) is arranged and mounted; and
- an actuator (56) which, via an opening (63) in the housing (60), is coupled mechanically to the iris diaphragm mechanism (50) for the purpose of actuating the latter,
**characterized in that** the actuator (56) is arranged on the housing (60) in such a way that the opening (63) is closed off in a sealed manner by means of the actuator (56), wherein provision is made of a sealing material (61) which surrounds the opening (63) and which is arranged between the actuator (56) and the housing (60), wherein the housing (60) or the actuator (56) has a groove (62) which surrounds the opening (63) and in which the sealing material (61) is arranged.

2. Compressor (30) according to Claim 1, wherein the actuator (56) is designed as a cover for the opening (63) of the housing (60).

3. Compressor (30) according to Claim 1 or 2, wherein the actuator (56) has a flat bottom side (64), by way of which the actuator (56) is fixed to the housing (60) from the outside so as to cover the opening (63).

4. Compressor (30) according to one of the preceding claims, wherein, via a coupling mechanism (65) arranged within the housing (60), the actuator (56) is coupled mechanically to an adjustable adjusting ring (53) of the iris diaphragm mechanism (50) for the purpose of closing or opening the diaphragm aperture (55).

5. Compressor (30) according to one of the preceding claims, wherein the housing (60) is of one-part or multi-part form.

6. Compressor (30) according to Claim 5, wherein the housing (60) is of two-part form, wherein a first part of the housing (60) is part of a compressor housing (31) and a second part is formed as a housing element which is connected to the first part.

7. Compressor (30) according to one of the preceding claims, wherein the housing (60) is formed as part of a compressor housing (31).

8. Compressor (30) according to one of Claims 1 to 5, wherein the housing (60) is a housing which is separate from a compressor housing (31) and which is fixed to the compressor housing (31).

9. Supercharging device (1) for an internal combustion engine, having a rotor bearing (40) in which a rotor shaft (14) is rotatably mounted, and having a compressor (30) according to one of the preceding claims, wherein the supercharging device (1) is designed as an exhaust-gas turbocharger or as an electromotively operated supercharger or as a supercharger operated via a mechanical coupling to the internal combustion engine.

## Revendications

1. Compresseur (30) pour un dispositif de suralimentation (1) d'un moteur à combustion interne, comprenant :
- une roue de compresseur (13), qui est agencée de manière solidaire en rotation sur un arbre de rotor (14) ; et
- un canal d'amenée d'air (36) pour conduire un courant massique d'air (LM) vers la roue de compresseur (13),
- un mécanisme de diaphragme à iris (50) agencé en amont de la roue de compresseur (13), qui présente plusieurs lamelles (52) et qui est configuré pour fermer ou ouvrir une ouverture de diaphragme (55), de telle sorte qu'une section transversale d'écoulement pour le courant massique d'air (LM) est réglable de manière variable pour affluer sur la roue de compresseur (13) ;
- un boîtier (60), qui délimite au moins partiellement le canal d'amenée d'air (36) et dans lequel le mécanisme de diaphragme à iris (50) est agencé et monté ; et
- un actionneur (56), qui est couplé mécaniquement, par l'intermédiaire d'une ouverture (63) dans le boîtier (60), au mécanisme de diaphragme à iris (50) pour actionner celui-ci,
**caractérisé en ce que** l'actionneur (56) est agencé sur le boîtier (60) de telle sorte que l'ouverture (63) est fermée de manière étanche au moyen de l'actionneur (56), un matériau d'étanchéité (61) étant prévu, qui entoure l'ouverture (63) et qui est agencé entre l'actionneur (56) et le boîtier (60), le boîtier (60) ou l'actionneur (56) présentant une rainure (62) entourant l'ouverture (63), dans laquelle est agencé le matériau d'étanchéité (61) .

2. Compresseur (30) selon la revendication 1, dans lequel l'actionneur (56) est configuré sous forme de couvercle pour l'ouverture (63) du boîtier (60).

3. Compresseur (30) selon la revendication 1 ou 2, dans lequel l'actionneur (56) présente un côté inférieur plat (64), par lequel l'actionneur (56) est fixé depuis l'extérieur sur le boîtier (60) en recouvrant l'ouverture (63) .

4. Compresseur (30) selon l'une quelconque des revendications précédentes, dans lequel l'actionneur (56) est couplé mécaniquement, par l'intermédiaire d'un mécanisme de couplage (65) agencé à l'intérieur du boîtier (60), à une bague de réglage réglable (53) du mécanisme de diaphragme à iris (50) pour fermer ou ouvrir l'ouverture de diaphragme (55).

5. Compresseur (30) selon l'une quelconque des revendications précédentes, dans lequel le boîtier (60) est configuré en une partie ou en plusieurs parties.

6. Compresseur (30) selon la revendication 5, dans lequel le boîtier (60) est configuré en deux parties, une première partie du boîtier (60) faisant partie d'un boîtier de compresseur (31) et une deuxième partie étant configurée sous la forme d'un élément de boîtier relié à la première partie.

7. Compresseur (30) selon l'une quelconque des revendications précédentes, dans lequel le boîtier (60) est configuré en tant que partie d'un boîtier de compresseur (31).

8. Compresseur (30) selon l'une quelconque des revendications 1 à 5, dans lequel le boîtier (60) est un boîtier séparé d'un boîtier de compresseur (31), qui est fixé au boîtier de compresseur (31).

9. Dispositif de suralimentation (1) pour un moteur à combustion interne, comprenant un palier de rotor (40) dans lequel un arbre de rotor (14) est monté à rotation, et un compresseur (30) selon l'une quelconque des revendications précédentes, le dispositif de suralimentation (1) étant configuré sous forme de turbocompresseur à gaz d'échappement ou sous forme de compresseur fonctionnant avec un moteur électrique ou sous forme de compresseur fonctionnant par l'intermédiaire d'un couplage mécanique avec le moteur à combustion interne.
